# EUROPÄISCHE PATENTSCHRIFT

(11) **EP 3 752 393 B1**
(45) Veröffentlichungstag und Bekanntmachung des Hinweises auf die Patenterteilung: **18.11.2026**
(21) Anmeldenummer: 19702809.5
(22) Anmeldetag: 11.01.2019
(51) Int. Cl.: B60R 16/02, H01R 35/04

(54) **STECKDOSENVORRICHTUNG FÜR EIN KRAFTFAHRZEUG SOWIE KRAFTFAHRZEUG MIT EINER STECKDOSENVORRICHTUNG**
PLUG SOCKET DEVICE FOR A MOTOR VEHICLE, AND MOTOR VEHICLE HAVING A PLUG SOCKET DEVICE
DISPOSITIF DE PRISE POUR UN VÉHICULE AUTOMOBILE ET VÉHICULE AUTOMOBILE DOTÉ D'UN DISPOSITIF DE PRISE

(30) Priorität: 15.02.2018 DE 102018202342
(43) Veröffentlichungstag der Anmeldung: 23.12.2020
(73) Patentinhaber: VOLKSWAGEN AKTIENGESELLSCHAFT, 38440 Wolfsburg (DE)
(72) Erfinder: SALABAI, Anton, 38448 Wolfsburg (DE)
(86) Internationale Anmeldenummer: PCT/EP2019/050667
(87) Internationale Veröffentlichungsnummer: WO 2019/158284

(56) Entgegenhaltungen:
- WO-A1-2013/025634
- WO-A2-2007/084316
- DE-U1- 202015 102 641
- US-A1- 2013 344 721

## Beschreibung

Die Erfindung betrifft eine Steckdosenvorrichtung für ein Kraftfahrzeug sowie ein Kraftfahrzeug mit einer derartigen Steckdosenvorrichtung.

Der stetig wachsende Bedarf an Schnittstellen für elektrische Geräte, die bei einer typischen Netzspannung von beispielsweise 230 Volt betrieben werden, in Kraftfahrzeugen erfordert den Verbau von DC/AC-Spannungswandlern und die Unterbringung der dazugehörigen 230-Volt-Steckdose im Kraftfahrzeug. Im Bereich der Personenkraftwagen ist eine solche Steckdose in den meisten Fällen in der Instrumententafel, Mittelkonsole oder im Kofferraum des Kraftfahrzeugs vorzufinden. Im Bereich der Nutzfahrzeuge ergibt sich die Besonderheit, dass diese Fahrzeuge räumlich in zwei nach allen Seiten hin festumschlossene Fahrzeugbereiche unterteilt sind, in einen Laderaum und einen Fahrgastraum. Diese beiden Fahrzeugbereiche sind meist mithilfe einer Trennwand voneinander abgetrennt. In Nutzfahrzeugen unterscheiden sich somit nach Einsatzzweck und Position der Steckdose die Nutzungsszenarien und die verwendeten Geräte. Während eine Steckdose im Fahrgastraum hauptsächlich zum Aufladen von Multimediageräten dient, wird diese im Laderaum überwiegend zum Benutzen oder Aufladen von elektrisch betriebenen Werkzeugen verwendet. Um die gesamte Nutzungsbreite von Steckdosen in einem Kraftfahrzeug abdecken zu können, wird also sowohl im Fahrgastraum als auch im Laderaum eine 230-Volt-Schnittstelle benötigt.

In der DE 10 2006 011 946 A1 wird ein System zur Verteilung elektrischer Energie im Inneren eines Fahrzeuges beschrieben, bei dem eine Stromverbinderanordnung in einer Schienenanordnung gleiten kann. Ein Stromversorgungsträger, das heißt eine Steckdose, kann also mit diesem System zu einem gewünschten Ort auf der Stromversorgungsschiene bewegt werden und daher an unterschiedlichen Stellen in einem Laderaum eines Kraftfahrzeugs zur Verfügung stehen.

In der DE 10 2013 209 529 A1 wird ein Stecker mit einem Stromanschluss beschrieben, der relativ zu einem Grundkörper eines Steckersystems, das Adapteranschlüsse an den Seiten des Grundkörpers aufweist, gedreht werden kann. Durch diese Rotation können die Adapteranschlüsse des Steckersystems an die gewünschten Seiten gedreht werden, sodass die Adapteranschlüsse besonders gut für einen Benutzer zugänglich sind.

Die DE 20 2015 102 641 U1 zeigt einen elektronischen Konnektorverteiler für ein Fahrzeug, der in einer Wand eines Aufbewahrungsraums in einer Mittelkonsole des Fahrzeugs montiert ist und zwischen zwei Positionen bewegbar ist. In einer ersten Position ist er aus dem Inneren des Aufbewahrungsraums her zugänglich und in einer zweiten Position von außerhalb des Abteils aus.

Es ist die Aufgabe der Erfindung, ein System für ein Kraftfahrzeug bereitzustellen, mit dem technisch besonders einfach in zwei voneinander getrennten Kraftfahrzeugbereichen eine Steckdose bereitgestellt werden kann.

Erfindungsgemäß wird diese Aufgabe durch eine Steckdosenvorrichtung für ein Kraftfahrzeug gelöst.

Die erfindungsgemäße Steckdosenvorrichtung für ein Kraftfahrzeug nach Anspruch 1 umfasst eine in einem Gehäuse angeordnete Steckdose zum Aufnehmen eines Steckers. Die Steckdosenvorrichtung ist gekennzeichnet durch eine Lagerung, mittels welcher das Gehäuse derart um eine Drehachse drehbar zumindest mittelbar an einer Trennwand des Kraftfahrzeugs lagerbar ist, dass die Steckdose durch eine jeweilige Drehung des Gehäuses von beiden Seiten der Trennwand her zugänglich ist. Es wird also erfindungsgemäß eine elektrische Steckverbindung zur Herstellung eines Kontaktes zwischen einem Stromkabel und einem elektrischen Gerät mithilfe eines Steckers vorgeschlagen, die in einer Umhüllung angeordnet ist. Dies Umhüllung, also das Gehäuse, in dem die Steckdose angeordnet ist, ist um eine Rotationsachse beweglich. Die Rotationsbewegung erfolgt mithilfe eines entsprechenden Maschinenelements, und zwar einer Lagerung. Diese Lagerung ist indirekt über Zwischenglieder oder direkt an einer Wand im Kraftfahrzeug, die zwei Bereiche des Kraftfahrzeugs voneinander trennt, anordbar. Das Gehäuse mit der Steckdose ist somit mittels der Lagerung um die Rotationsachse derart drehbar, dass es mit einer entsprechenden Drehbewegung möglich ist, dass die Steckdose im jeweiligen der beiden Bereiche des Kraftfahrzeugs genutzt werden kann.

Eine derartige Steckdosenvorrichtung kann beispielsweise in ein Nutzfahrzeug eingebaut werden, das eine Trennwand aufweist, die einen Fahrgastraum und einen Laderaum voneinander trennt. Mithilfe einer entsprechenden Drehung des Gehäuses der Steckdosenvorrichtung kann die Steckdose sowohl vom Fahrgastraum her auch vom Laderaum her benutzt werden. Im Fahrgastraum kann beispielsweise mithilfe der Steckdose der Steckdosenvorrichtung ein elektrisches Gerät, wie beispielsweise ein Mobiltelefon oder ein Tablet-PC, aufgeladen werden. Im Laderaumbereich des Kraftfahrzeugs kann die Steckdose der Steckdosenvorrichtung genutzt werden, um beispielsweise elektrisch betriebene Werkzeuge aufzuladen oder zu benutzen.

Mithilfe der Steckdosenvorrichtung für ein Kraftfahrzeug kann somit besonders vorteilhaft und technisch einfach realisierbar, eine Steckdose in einem Kraftfahrzeug bereitgestellt werden, die von zwei getrennten Bereichen des Kraftfahrzeugs aus verwendet werden kann. In einem der beiden Bereiche kann zudem jederzeit die Steckdose benutzt werden, da diese über eine ständige Verbindung zu einer Stromquelle verfügt. Die Steckdosenvorrichtung ermöglicht somit, dass mit einer einzelnen Steckdose beide räumlich voneinander getrennten Fahrzeugbereiche mit elektrischer Energie versorgt werden können und nicht zwei separate Steckdosen im Kraftfahrzeug benötigt werden.

Alternativ kann die Steckdosenvorrichtung anstelle einer in einem Gehäuse angeordneten Steckdose zum Aufnehmen eines Steckers auch lediglich eine Steckdose ohne zusätzliches Gehäuse umfassen. An der Steckdose ist dann direkt eine Lagerung angeordnet, mittels welcher die Steckdose derart um eine Drehachse drehbar zumindest mittelbar an einer Trennwand des Kraftfahrzeugs lagerbar ist, dass die Steckdose durch eine jeweilige Drehung der Steckdose von beiden Seiten der Trennwand her zugänglich ist.

Erfindungsgemäß ist es vorgesehen, dass das Gehäuse als gerader Kreiszylinder derart ausgebildet ist, dass die Drehachse des Gehäuses parallel zu einem Zylindermantel durch jeweilige Mittelpunkte einer Grund- und Deckfläche des Kreiszylinders verläuft. Das Gehäuse weist somit die Form eines Kreiszylinders auf. Die kreisförmigen Flächen am oberen und unteren Ende dieses Zylinders stehen senkrecht zur Achse, um die sich der Drehzylinder dreht. Die Drehachse verläuft dabei durch die Mittelpunkte dieser kreisförmigen Zylinderflächen. Im Bereich der Mittelpunkte der Zylinderflächen ist zudem die Lagerung angeordnet, mittels welcher das Gehäuse um die Drehachse drehbar ist. Mithilfe dieser Gehäuseform und Positionierung der Drehachse des Gehäuses ist eine besonders vorteilhafte Steckdosenvorrichtung gegeben, insbesondere in Hinblick auf die gewünschte Drehbewegung des Gehäuses.

Bei dieser Ausgestaltung der Erfindung ist es vorgesehen, dass an zwei jeweils in einem vorbestimmten Abstand parallel zur Grund- und Deckfläche des Gehäuses angeordneten Zylinderflächen jeweils ein vorbestimmtes Kreissegment mit einem vorbestimmten Kreisbogen einer vorbestimmten Kreissehne derart ausgespart wurde, dass das Gehäuse zwischen den beiden Zylinderflächen eine Aussparung aufweist, an der die Steckdose in dem Gehäuse angeordnet ist. Die Steckdose ist also in einer Aussparung des Gehäuses, das als gerader Kreiszylinder ausgebildet ist, angeordnet. Diese Aussparung beginnt in einem vorbestimmten Abstand, das heißt in einer vorbestimmten Distanz, zu den beiden Enden des Kreiszylinders. Parallel zu den den Kreiszylinder abschließenden Grund- und Deckflächen des Kreiszylinders sind somit in einem gewissen Abstand zur Grund- und Deckfläche Zylinderflächen angeordnet, die zumindest teilweise die Gehäusewand im Bereich der Aussparung darstellen. Diese Bereiche der Zylinderflächen, die im Bereich der Aussparung als Gehäusewand dienen, können als Kreisabschnitte beschrieben werden. In der Geometrie ist ein Kreisabschnitt oder Kreissegment derart definiert, dass es die Teilfläche einer Kreisfläche umfasst, die von einem Kreisbogen und einer Kreissehne begrenzt wird. Unter dem Kreisbogen wird eine zusammenhängende Teilmenge eines Kreises verstanden. In diesem Zusammenhang ist mit dem Wort Kreis nicht die eingeschlossene Kreisfläche gemeint, sondern der Kreisrand, der auch als Kreislinie oder Kreisperipherie bezeichnet wird. Die Verbindungsstrecke von zwei Punkten auf der Kreislinie wird als Kreissehne bezeichnet. Zwischen den beiden in einer gewissen Distanz zur Grund- und Deckfläche des Gehäuses angeordneten Zylinderflächen wird also ein Teil des Gehäuses ausgespart, dessen Grundfläche dem vorbestimmten Kreissegment entspricht. Senkrecht zu den Zylinderflächen und den Grund- und Deckflächen ist im Bereich dieser Aussparung die Steckdose in dem Gehäuse angeordnet. Der Abstand der entsprechenden Zylinderfläche zur Grund- oder Deckfläche kann dabei maximal die Hälfte der Differenz von der Gesamthöhe des Zylinders und der Höhe der Steckdose betragen. Durch die beschriebene Ausgestaltung des Gehäuses der Steckdosenvorrichtung, das also seitlich zur Steckdose zylinderförmige Randbereiche aufweist, ist das Gehäuse besonders leicht manuell bewegbar, insbesondere zwischen den zumindest zwei Positionen und der Zwischenposition des Gehäuses.

Alternativ ist es auch möglich, dass sich die Aussparung über die gesamte Zylinderhöhe erstreckt und somit das Gehäuse keine kreisförmige Grund- und Deckfläche aufweist. Die Grund- und Deckfläche des Gehäuses entsprechen dann Kreisflächen mit einem vorbestimmten ausgeschnittenen Kreissegment.

In einer Ausgestaltung der Erfindung ist es vorgesehen, dass das Gehäuse von zwei an einer Trennwand lagerbaren Haltern eingeschlossen ist. Das Gehäuse mit der Steckdose wird somit von zwei Seiten von Befestigungselementen umschlossen, mithilfe derer es an der Trennwand des Kraftfahrzeugs befestigt werden kann. Diese Halter ermöglichen zudem, dass mithilfe der Lagerung der Steckdosenvorrichtung das Gehäuse um die Drehachse drehbar ist, wobei die Lagerung nicht direkt mit der Trennwand des Kraftfahrzeugs in Verbindung gebracht sein muss. Um die Steckdosenvorrichtung in einer Trennwand in einem Kraftfahrzeug zu installieren, muss in dieser Trennwand lediglich eine entsprechend große Aussparung vorhanden sein. Die Steckdosenvorrichtung selbst umfasst das Gehäuse mit der Steckdose, die Lagerung und die Halterung, sodass die Steckdosenvorrichtung besonders einfach als fertiges Bauteil in der Trennwand eines Kraftfahrzeugs verbaut werden kann.

In weiterer vorteilhafter Ausgestaltung der Erfindung ist es vorgesehen, dass die Steckdose dazu ausgelegt ist, eine elektrische Spannung von 100, 115, 120, 127, 200, 220, 230 oder 240 Volt bereitzustellen. Mit der Steckdosenvorrichtung können somit unterschiedliche Ländervarianten realisiert werden, je nachdem welche Netzspannung lokal bereitgestellt wird. Zudem kann die Steckdose derart ausgebildet sein, dass verschiedene Steckertypen von der Steckdose aufgenommen werden können. Beispielsweise wären Steckdosen zum Aufnehmen eines Steckers der Typen A und B, wie er beispielsweise in den USA, Kanada oder Mexiko verwendet werden, des Typs F, wie er in den meisten europäischen Ländern verwendet wird, des Typs G, wie er beispielsweise in Großbritannien verwendet wird, oder des Typs I, wie er beispielsweise in Australien und Neuseeland verwendet wird, möglich. Des Weiteren kann die Steckdose derart ausgebildet sein, dass verschiedene Netzfrequenzen, von beispielsweise 50 oder 60 Hertz, möglich sind. Bei ausreichender Leistungsbereitstellung im Kraftfahrzeug kann die Steckdose auch dazu ausgelegt sein, einen Dreiphasenwechselstrom mit einer Nennspannung von 400 V gemäß dem internationalen Standard für "Stecker, Steckdosen und Kupplungen für industrielle Anwendungen" IEC 60309 bereitzustellen. Die Steckdosenvorrichtung für ein Kraftfahrzeug ist somit weltweit zur Verwendung elektrischer Geräte in einem Kraftfahrzeug geeignet.

In einer weiteren vorteilhaften Ausgestaltung der Erfindung ist es vorgesehen, dass das Gehäuse um die Drehachse in zumindest zwei vorbestimmte Positionen drehbar ist. Durch ein Drehen des Gehäuses um die Rotationsachse kann die in dem Gehäuse angeordnete Steckdose somit in mindestens zwei definierte Stellungen gebracht werden. Diese Stellungen sind derart gewählt, dass bei der einen Position die Steckdose vom Fahrgastraum aus zugänglich ist und in der anderen zweiten Stellung vom Laderaum aus. Alternativ zu den zumindest zwei vorbestimmten Positionen des Gehäuses ist es auch möglich, dass das Gehäuse kontinuierlich um die Drehachse beweglich angeordnet ist.

Durch vorbestimmte Positionen des Gehäuses, in denen das Gehäuse beispielsweise mithilfe eines entsprechenden Haltemechanismus einrastet, ist ein besonders vorteilhafter und einfacher Wechsel zwischen den zumindest zwei Gehäusepositionen möglich. Das Gehäuse der Steckdosenvorrichtung kann somit mit relativ geringem Aufwand manuell derart gedreht werden, dass die Steckdose von dem gewünschten Teilbereich des Kraftfahrzeugs aus zugänglich ist.

In weiterer vorteilhafter Ausgestaltung der Erfindung ist es vorgesehen, dass das Gehäuse um die Drehachse in eine vorbestimmte Zwischenposition drehbar ist, in der die Steckdose von keiner der beiden Seiten der Trennwand her zugänglich ist. Es ist somit zusätzlich oder alternativ zu den zumindest zwei vorbestimmten Positionen des Gehäuses noch eine weitere dritte Position vorgesehen. In dieser dritten Position kann die Steckdose weder vom Fahrgastraum noch vom Laderaum aus verwendet werden, da die Steckdose in dieser Zwischenposition parallel zur Trennwand angeordnet ist. Diese Zwischenposition kann gewählt werden, wenn die Steckdose von keiner der beiden Seiten her zugänglich sein muss, da diese zurzeit nicht verwendet wird. Hierdurch ergibt sich der Vorteil, dass die Steckdose auch ohne eine in die Steckdosenvorrichtung integrierte Schutzkappe vor Schmutz oder im Kraftfahrzeug während der Fahrt verrückenden Gegenständen geschützt ist.

In weiterer vorteilhafter Ausgestaltung der Erfindung ist es vorgesehen, dass das Gehäuse als Prisma mit dreieckiger Grundfläche derart ausgebildet ist, dass die Drehachse des Gehäuses entlang einer Kante des Prismas senkrecht zu den dreieckigen Grundflächen verläuft und die Steckdose an einer Seitenfläche des Gehäuses gegenüber der Drehachse angeordnet ist. Die Steckdosenvorrichtung kann also auch als eine Art Klapphalter mit Steckdose in die Trennwand des Kraftfahrzeugs integriert sein. In dieser Ausgestaltung ist das Gehäuse der Steckdosenvorrichtung in Form eines Prismas ausgebildet. Dieses Prisma weist als Grundflächen Dreiecke auf, wobei die Steckdose selbst an einer der Seitenflächen des Prismas, also an einer der viereckigen Seitenflächen des Prismas angeordnet ist. Die Lagerung dieser Steckdosenvorrichtung ist derart angeordnet, dass die Drehachse des Gehäuses entlang einer Kante des Prismas verläuft, die senkrecht zu den dreieckigen Grundflächen verläuft. Durch ein Drehen des Gehäuses um die Drehachse wird die der Drehachse gegenüberliegende Seitenfläche des Gehäuses aus der Trennwand hinaus beziehungsweise auf die andere Seite der Trennwand hinüber gekippt. Die derart von einer Seite der Trennwand zur anderen Seite der Trennwand bewegbare Seitenfläche umfasst die Steckdose der Steckdosenvorrichtung. Mit dieser ebenfalls besonders vorteilhaft zu bedienenden Gehäuseausgestaltung ist somit ebenfalls eine Steckdosenvorrichtung gegeben, die von zwei Seiten einer Trennwand eines Kraftfahrzeugs her zugänglich ist, falls die Steckdosenvorrichtung in der Trennwand des Kraftfahrzeugs angeordnet ist.

Erfindungsgemäß ist zudem ein Kraftfahrzeug mit einer Steckdosenvorrichtung, wie sie oben beschrieben wurde, vorgesehen, wobei die Steckdosenvorrichtung an einer Trennwand des Kraftfahrzeugs angeordnet ist. Dieses Kraftfahrzeug weist also eine Trennwand auf, die eine Aussparung für eine Steckdosenvorrichtung enthält, sodass die Steckdosenvorrichtung an dieser Trennwand angeordnet sein kann. Die Steckdosenvorrichtung ist daraufhin von beiden Seiten der Trennwand aus benutzbar.

In weiterer vorteilhafter Ausgestaltung des erfindungsgemäßen Kraftfahrzeugs ist es vorgesehen, dass die Trennwand einen Fahrgastraum und einen Laderaum voneinander trennt oder eine Außenwand des Kraftfahrzeugs ist. Die Steckdosenvorrichtung lässt sich somit in einem Kraftfahrzeug verwenden, in dem durch die Trennwand der Bereich, in dem sich ein Fahrer und gegebenenfalls ein Beifahrer aufhalten, von einem hinteren Fahrzeugbereich, dem Laderaum, abgetrennt ist. Bei dem hinteren Fahrzeugteil, das heißt bei dem Laderaum, könnte es sich auch um einen vom Fahrgastraum abgetrennten Passagierraum handeln, und somit bei dem Kraftfahrzeug beispielsweise um ein Taxi oder eine Limousine.

Zudem muss die Steckdosenvorrichtung nicht in einer Trennwand im Fahrzeuginneren integriert sein, sondern kann auch in einer Außenwand des Kraftfahrzeugs angeordnet sein. Diese Anwendung ist beispielsweise für einen Campingwagen oder ein Wohnmobil sinnvoll, damit mit der Steckdosenvorrichtung elektrische Geräte sowohl im Fahrzeuginneren als auch außerhalb des Fahrzeuges, beispielsweise auf einem Campingplatz, verwendet werden können. Um die Verwendung der Steckdosenvorrichtung in einer Außenwand eines Kraftfahrzeugs sinnvoll zu realisieren, wird die Steckdosenvorrichtung derart konstruiert, dass sie wasser- und witterungsfest ist und somit bei Regen, Schnee oder anderen Wetterlagen nicht beschädigt wird. Die Steckdosenvorrichtung kann somit immer an den Orten in einem Kraftfahrzeug angeordnet werden, an denen es sinnvoll ist, von beiden Seiten der entsprechenden Wand auf eine Steckdosenvorrichtung zugreifen zu können.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1a: eine schematische Darstellung von verschiedenen Anordnungspositionen einer Steckdosenvorrichtung in einem Fahrgastraum eines Kraftfahrzeugs;
- Fig. 1b: eine schematische Darstellung von verschiedenen Positionen einer Steckdosenvorrichtung in einem Laderaum eines Kraftfahrzeugs;
- Fig. 2: eine schematische Explosionsdarstellung einer Steckdosenvorrichtung;
- Fig. 3: eine schematische Darstellung verschiedener Drehpositionen einer Steckdosenvorrichtung;
- Fig. 4: eine schematische Darstellung einer Steckdosenvorrichtung mit einer Kappe;
- Fig. 5: eine schematische Darstellung eines Gehäuses einer Steckdosenvorrichtung;
- Fig. 6: eine schematische Darstellung einer Steckdosenvorrichtung mit einem als Prisma ausgebildeten Gehäuse;
- Fig. 7: eine schematische Darstellung einer Steckdosenvorrichtung für einen Campingwagen;
- Fig. 8a: eine schematische Darstellung einer Steckdosenvorrichtung mit einem zylinderförmigen Gehäuse mit einem Verstellrad;
- Fig. 8b: eine schematische Explosionsdarstellung einer Steckdosenvorrichtung mit einem zylinderförmigen Gehäuse mit einem Verstellrad.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

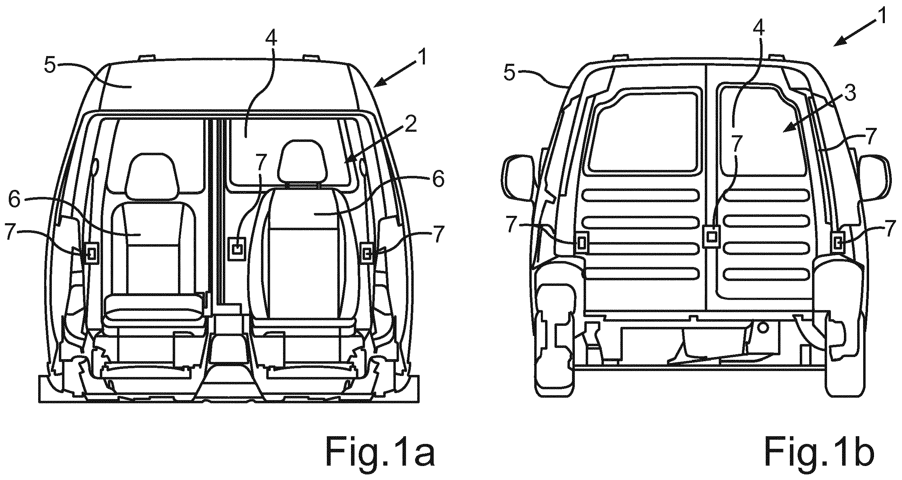

In den Figuren 1a und 1b sind zwei Ansichten eines Kraftfahrzeugs 1 skizziert. In Fig. 1a ist der Innenraum des Kraftfahrzeugs 1 im Bereich des Fahrgastraums 2 skizziert. In Fig. 1b ist der Innenraum des Kraftfahrzeugs 1 im Bereich des Laderaums 3 skizziert. Der Fahrgastraum 2 und der Laderaum 3 sind durch eine Trennwand 4 voneinander getrennt. In den Figuren 1a und 1b ist zudem die Außenwand 5 des Kraftfahrzeugs 1 skizziert und zudem im Bereich des Fahrgastraums 2 zwei Sitze 6. In den Figuren 1a und 1b sind drei mögliche Anordnungspositionen für eine Steckdosenvorrichtung 7 skizziert. Die Steckdosenvorrichtung 7 kann entweder in einem der beiden Bereiche zwischen einem der Sitze 6 und der Außenwand 5 des Kraftfahrzeugs 1 in die Trennwand 4 eingebaut sein, oder in etwa in der Mitte der Trennwand 4, zwischen den beiden Sitzen 6. Mit diesen drei möglichen Anordnungspositionen der Steckdosenvorrichtung 7 kann die Steckdosenvorrichtung 7 derart in der Trennwand 4 angeordnet sein, dass sie entweder nur vom Fahrer- oder Beifahrerplatz oder von beiden Sitzen 6 aus zugänglich ist.

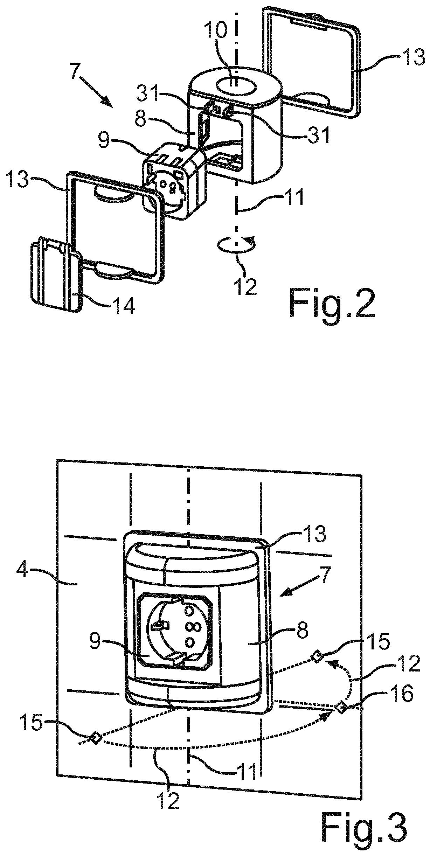

In Fig. 2 ist die Steckdosenvorrichtung 7 in einer Explosionsdarstellung skizziert. Die Steckdosenvorrichtung 7 umfasst ein Gehäuse 8, in dem eine Steckdose 9 zum Aufnehmen eines Steckers angeordnet ist. Die Steckdosenvorrichtung 7 weist zudem eine Lagerung 10 auf. Mithilfe der Lagerung 10 wird eine Drehbewegung des Gehäuses 8 um eine Drehachse 11 ermöglicht. Das Gehäuse 8 wird von zwei Seiten von jeweils einem Halter 13 eingeschlossen. In diesen Haltern 13 wird die Lagerung 10 derart gelagert, dass das Gehäuse 8, wenn die Steckdosenvorrichtung 7 in eine Trennwand 4 eines Kraftfahrzeugs 1 eingebaut wurde, derart um die Drehachse 11 drehbar ist, dass die Steckdose 9 von beiden Seiten der Trennwand 4 her zugänglich ist. Diese Drehung um die Drehachse 11 erfolgt um einen bestimmten Drehwinkel 12. Zum Schutz der Steckdose 9 weist die Steckdosenvorrichtung 7 zudem eine Klappe 14 auf, die an entsprechenden Halterungen 31 am Gehäuse 8 befestigt ist.

In Fig. 3 ist ebenfalls eine Steckdosenvorrichtung 7 skizziert, die in einer Trennwand 4 in einem Kraftfahrzeug 1 angeordnet ist. Durch eine Drehung des Gehäuses 8 um die Drehachse 11 kann das Gehäuse 8 um insgesamt 180 Grad rotiert werden. Dadurch ist es möglich, dass eine Steckdosenposition 15 im Fahrgastraum 2 sowie um 180 Grad versetzt dazu eine zweite Steckdosenposition 15 im Laderaum 3 des Kraftfahrzeugs 1 von dem Gehäuse 8 eingenommen werden kann. Zudem kann das Gehäuse 8 eine Zwischenposition 16 einnehmen, die jeweils in einem 90-Grad-Winkel zu den beiden Steckdosenpositionen 15 angeordnet ist. In dieser Zwischenposition 16 ist die Steckdose 9 weder von dem Fahrgastraum 2 noch vom Laderaum 3 aus zugänglich. Die Zwischenposition 16 stellt somit eine Art Schutzposition dar, in der, im Falle einer Steckdosenvorrichtung 7 ohne Klappe 14, die Steckdose 9 vor Schmutz oder in potenziell gefährlichen Situationen, wie beispielsweise während einer Fahrt des Kraftfahrzeugs 1 im Laderaum 3 oder Fahrgastraum 2 auf die Steckdosenvorrichtung 7 stoßende Gegenstände, geschützt ist.

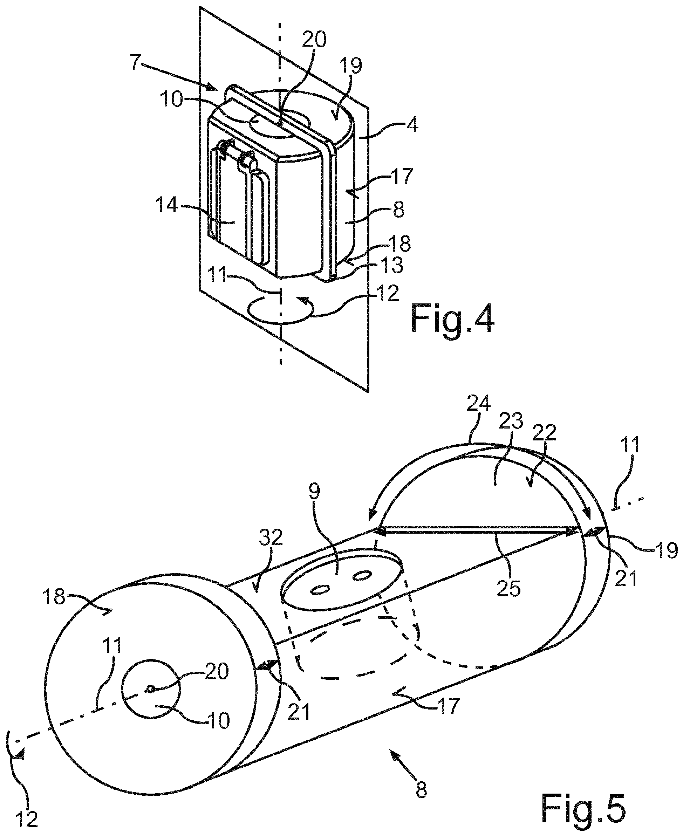

In Fig. 4 ist erneut eine Steckdosenvorrichtung 7 mit einer Klappe 14 skizziert. Das Gehäuse 8 der Steckdosenvorrichtung 7 ist als gerader Kreiszylinder ausgebildet, und zwar derart, dass die Drehachse 11 des Gehäuses 8 parallel zum Zylindermantel 17 angeordnet ist. Die Drehachse 11 geht zudem durch die jeweiligen Mittelpunkte 20 der Grundfläche 18 sowie der Deckfläche 19 des zylinderförmigen Gehäuses 8. Um diese Drehachse 11 ist das Gehäuse 8 mittels der Lagerung 10 um einen Drehwinkel 12 von insgesamt etwa 180 Grad drehbar. Die Steckdosenvorrichtung 7 kann somit ein Gehäuse 8 aufweisen, in das die Steckdose 9 integriert ist und das in Form eines Drehzylinders ausgebildet ist.

In Fig. 5 ist eine alternative Ausformung eines Gehäuses 8 für eine Steckdosenvorrichtung 7 skizziert. In dieser Figur weist das zylinderförmige Gehäuse 8 eine Aussparung auf, in der die Steckdose 9 angeordnet ist. Diese Aussparung wird seitlich von zwei Zylinderflächen 22 begrenzt. Diese beiden Zylinderflächen 22 sind parallel zur Grundfläche 18 beziehungsweise Deckfläche 19 des Gehäuses 8 angeordnet. Der Abstand 21 zwischen den Zylinderflächen 22 und der Grundfläche 18 beziehungsweise Deckfläche 19 kann maximal die Hälfte der Differenz von der Gesamthöhe des Gehäuses 8 und der Steckdosenhöhe betragen. Um die Aussparung des Gehäuses 8 zu erhalten, wurde ein Körper aus dem Gehäuse 8 herausgeschnitten, der von zwei Flächen, die jeweils einem Kreissegment 23 entsprechen, begrenzt wird. Dieses Kreissegment 23 weist einen vorbestimmten Kreisbogen 24 sowie eine vorbestimmte Kreissehne 25 auf. Es wurde somit über eine vorbestimmte Höhe, die dem Abstand zwischen den beiden Zylinderflächen 22 entspricht, ein Teil des zylinderförmigen Gehäuses 8, dessen zwei Flächen den Kreissegmenten 23 entsprechen, aus dem Gehäuse 8 ausgespart, um an der dadurch entstehenden ebenen Zylinderoberfläche 32 die Steckdose 9 anzuordnen.

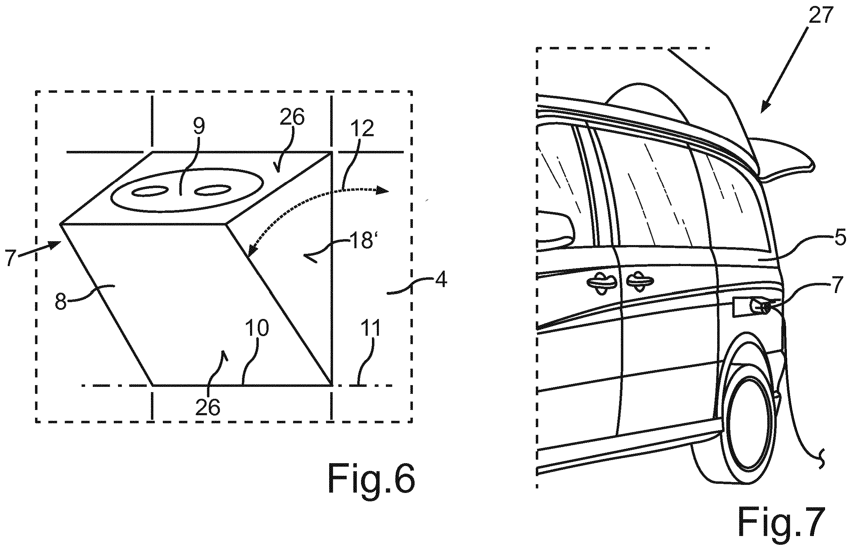

In Fig. 6 ist eine weitere mögliche Steckdosenvorrichtung 7 für ein Kraftfahrzeug 1 skizziert. Das Gehäuse 8 dieser Steckdosenvorrichtung 7 ist in Form eines Prismas mit dreieckigen Grundflächen 18' ausgebildet. Die Drehachse 11, um die dieses Gehäuse 8 um einen Drehwinkel 12 rotiert werden kann, steht senkrecht auf den viereckigen Seitenflächen 26 des Gehäuses 8 und verläuft entlang einer der Kanten des Prismas. Auf der Seitenfläche 26 des Gehäuses 8, die gegenüber dieser Drehachse 11 angeordnet ist, befindet sich die Steckdose 9 der Steckdosenvorrichtung 7. Die Steckdosenvorrichtung 7 kann somit wie eine Art Kippschalter aus der Trennwand 4, in der sie befestigt ist, geklappt werden und ist somit ebenfalls von beiden Seiten der Trennwand 4 her zugänglich. Der maximale Drehwinkel 12 bei dieser Steckdosenvorrichtung 7 ist jedoch kleiner als 180 Grad und ist somit kleiner als der maximale Drehwinkel 12 bei den in den Figuren 2 bis 5 skizzierten Steckdosenvorrichtungen 7.

In Fig. 7 ist ein Campingwagen 27 skizziert, der in seiner Außenwand 5 ebenfalls eine Steckdosenvorrichtung 7 aufweist. Die Steckdosenvorrichtung 7 muss somit nicht an einer Trennwand 4 in einem Fahrzeuginneren angeordnet sein, sondern kann auch an einer Außenwand 5 eines Kraftfahrzeugs 1 angeordnet sein. Im Falle einer derartigen Steckdosenvorrichtung 7 für einen Campingwagen 27 ist jedoch darauf zu achten, dass die Steckdose 9 mithilfe der Klappe 14 zuverlässig vor Wettereinflüssen, wie beispielsweise Regen oder Schnee, geschützt ist und somit die Steckdosenvorrichtung 7 insgesamt für eine Verwendung im Außenbereich geeignet ist.

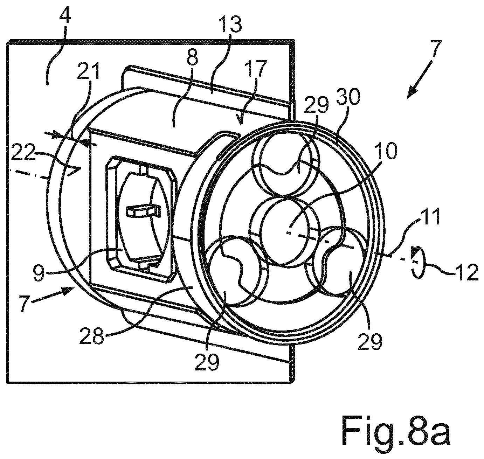

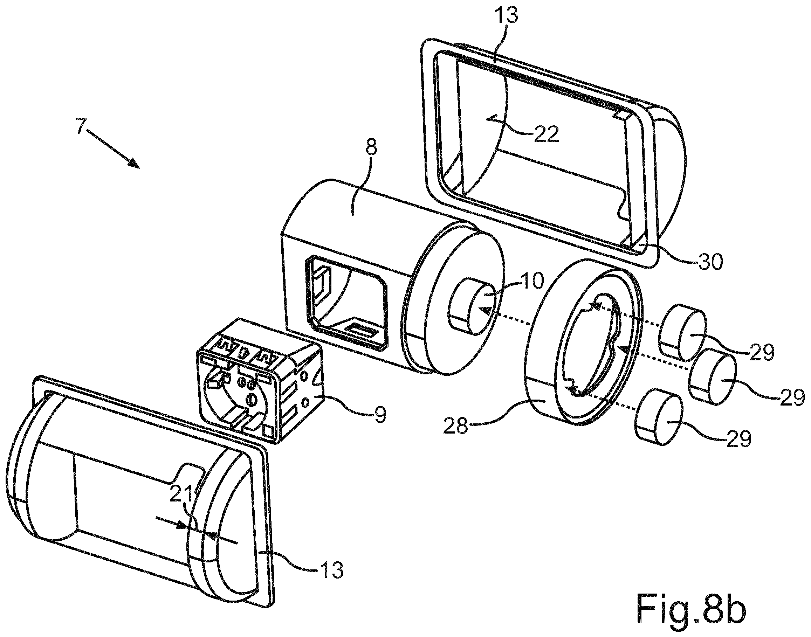

In den Figuren 8a und 8b ist erneut eine Steckdosenvorrichtung 7 für ein Kraftfahrzeug 1 skizziert, die ein zylinderförmiges Gehäuse 8 aufweist. Dieses Gehäuse 8 weist zudem Ränder auf, deren Breiten dem Abstand 21 entsprechen. In die Steckdosenvorrichtung 7 ist zudem ein Verstellrad 28 integriert, an dem drei Zahnräder 29 festmontiert sind. Die Zahnräder 29 sind dabei drehbar derart montiert, sodass sie zusammen mit einem festen Hohlrad 30, das in die beiden Halter 13 integriert ist, ein Umlaufrädergetriebe darstellen. Das entsprechende Sonnenrad des Umlaufrädergetriebes ist durch die Lagerung 10 und somit als Teil des Gehäuses 8 geben. Dass das Hohlrad 30 in die Halter 13 integriert ist, wird zudem in der Explosionsdarstellung dieser Steckdosenvorrichtung 7 in Fig. 8b deutlich.

Um mit dem Verstellrad 28 die mindestens zwei Steckdosenpositionen 15 sowie die Zwischenposition 16 besonders einfach durch ein Drehen des Gehäuses 8 am Verstellrad 28 um die Drehachse 11 zu erreichen, können zudem entsprechende Hebel mit dem Verstellrad 28 mitgeführt werden, die in entsprechenden Verstellradhalterungen im Bereich des Hohlrads 30 einrasten und somit die Position vorgegeben.

In den Figuren 8a und 8b ist ein Umlaufrädergetriebe mit einer Übersetzung von i = 2 skizziert, durch die es zu einer Untersetzung und somit zu einer Übersetzung zu einer schnelleren Bewegung der Steckdose im Vergleich zur manuellen Drehbewegung am Verstellrad 28 kommt. Diese Untersetzung wurde gewählt, damit das Gehäuse 8 der Steckdosenvorrichtung 7 besonders benutzerfreundlich manuell bewegt werden kann.

Die Kabelführung hinter der Steckdose 9 im Gehäuse 8 (nicht in Fig. 8a und 8b skizziert) ist derart ausgelegt, dass das Kabel eine gewisse Überlänge aufweist, damit insgesamt Drehungen um bis zu 180 Grad des Gehäuses 8 mit der integrierten Steckdose 9 möglich sind. Es sind somit keine Schleifkontakte nötig, um die Drehung des Gehäuses zu realisieren.

Alternativ zu den hier dargestellten Steckdosenvorrichtungen 7 kann die Steckdosenvorrichtung 7 um 90 Grad oder einen anderen Winkel gedreht an der Trennwand 4 beziehungsweise der Außenwand 5 des Kraftfahrzeugs 1 beziehungsweise des Campingwagens 27 angeordnet sein.

Bei der Wahl der Steckdose 9 sind verschiedene Ländervarianten möglich. Der Stecker kann als Stecker des Typs A oder B, wie zum Beispiel in den USA, Kanada oder Mexiko gebräuchlich, des Typ F, wie in vielen europäischen Ländern gebräuchlich, des Typ G, wie beispielsweise in Großbritannien gebräuchlich, des Typ I, wie in Australien und Neuseeland gebräuchlich, oder als ein anderer Steckertyp ausgebildet sein. Alternativ zu den in Europa üblichen 230 Volt Netzspannung wären auch andere Netzspannungen für die Steckdose 9 denkbar, wie beispielsweise 100, 115, 120, 127, 200, 220 oder 240 Volt.

Insgesamt zeigen die Beispiele, wie mit relativ einfachen technischen Mitteln eine Steckdosenvorrichtung 7 für ein Kraftfahrzeug 1 aufgebaut sein kann, die ein Gehäuse 8 sowie eine Steckdose 9 umfasst und mithilfe einer Lagerung 10 derart in einer Trennwand 4 oder Außenwand 5 eines Kraftfahrzeugs 1 beziehungsweise eines Campingwagens 27 lagerbar ist, dass die Steckdose 9 durch eine entsprechende Drehung um eine Drehachse 11 gedreht werden kann. Dadurch ist die Steckdose 9 von beiden Seiten der Trennwand 4 beziehungsweise der Außenwand 5 und somit beispielsweise von einem Fahrgastraum 2 und einem Laderaum 3 her zugänglich.

### Bezugszeichenliste

- 1: Kraftfahrzeug
- 2: Fahrgastraum
- 3: Laderaum
- 4: Trennwand
- 5: Außenwand
- 6: Sitz
- 7: Steckdosenvorrichtung
- 8: Gehäuse
- 9: Steckdose
- 10: Lagerung
- 11: Drehachse
- 12: Drehwinkel
- 13: Halter
- 14: Klappe
- 15: Steckdosenposition
- 16: Zwischenposition
- 17: Zylindermantel
- 18: Grundfläche
- 18': dreieckige Grundfläche
- 19: Deckfläche
- 20: Mittelpunkt
- 21: Abstand
- 22: Zylinderfläche
- 23: Kreissegment
- 24: Kreisbogen
- 25: Kreissehne
- 26: Seitenfläche
- 27: Campingwagen
- 28: Verstellrad
- 29: Zahnrad
- 30: Hohlrad
- 31: Halterung
- 32: Zylinderoberfläche

## Patentansprüche

1. Steckdosenvorrichtung (7) für ein Kraftfahrzeug (1), umfassend eine in einem Gehäuse (8) angeordnete Steckdose (9) zum Aufnehmen eines Steckers, wobei die Steckdosenvorrichtung (7)
eine Lagerung (10) umfasst, mittels welcher das Gehäuse (8) derart um eine Drehachse (11) drehbar zumindest mittelbar an einer Trennwand (4) des Kraftfahrzeugs (1) lagerbar ist, dass die Steckdose (9) durch eine jeweilige Drehung des Gehäuses (8) von beiden Seiten der Trennwand (4) her zugänglich ist,
**dadurch gekennzeichnet, dass**
das Gehäuse (8) als gerader Kreiszylinder derart ausgebildet ist, dass die Drehachse (11) des Gehäuses (8) parallel zu einem Zylindermantel (17) durch jeweilige Mittelpunkte (20) einer Grund- (18) und Deckfläche (19) des Kreiszylinders verläuft, wobei an zwei jeweils in einem vorbestimmten Abstand parallel zur Grund (18)- und Deckfläche (19) des Gehäuses (8) angeordneten Zylinderflächen (22) jeweils ein vorbestimmtes Kreissegment (23) mit einem vorbestimmten Kreisbogen (24) und einer vorbestimmten Kreissehne (25) derart ausgespart wurde, dass das Gehäuse (8) zwischen den beiden Zylinderflächen (22) eine Aussparung aufweist, an der die Steckdose (9) in dem Gehäuse (8) angeordnet ist.

2. Steckdosenvorrichtung nach Anspruch 1,
**dadurch gekennzeichnet, dass**
die Steckdose (9) dazu ausgelegt ist, eine elektrische Spannung von 100, 115, 120, 127, 200, 220, 230 oder 240 Volt bereitzustellen.

3. Steckdosenvorrichtung (7) nach einem der vorhergehenden Ansprüche,
**dadurch gekennzeichnet, dass**
das Gehäuse (8) um die Drehachse (11) in zumindest zwei vorbestimmte Positionen drehbar ist.

4. Steckdosenvorrichtung (7) nach einem der vorhergehenden Ansprüche,
**dadurch gekennzeichnet, dass**
das Gehäuse (8) um die Drehachse (11) in eine vorbestimmte Zwischenposition (16) drehbar ist, in der die Steckdose (9) von keiner der beiden Seiten der Trennwand (4) her zugänglich ist.

5. Steckdosenvorrichtung (7) nach einem der vorhergehenden Ansprüche,
**dadurch gekennzeichnet, dass**
das Gehäuse (8) von zwei an der Trennwand (4) lagerbaren Haltern (13) eingeschlossen ist.

6. Steckdosenvorrichtung (7) nach einem der vorhergehenden Ansprüche,
**dadurch gekennzeichnet, dass**
das Gehäuse (8) als Prisma mit dreieckiger Grundfläche (18') derart ausgebildet ist, dass die Drehachse (11) des Gehäuses (8) entlang einer Kante des Prismas senkrecht zu den Grundflächen (18) verläuft und die Steckdose (9) an einer Seitenfläche (26) des Gehäuses (8) gegenüber der Drehachse (11) angeordnet ist.

7. Kraftfahrzeug (1) mit einer Steckdosenvorrichtung (7) nach einem der Ansprüche 1 bis 6, wobei die Steckdosenvorrichtung (7) an einer Trennwand (4) des Kraftfahrzeugs (1) angeordnet ist.

8. Kraftfahrzeug (1) nach Anspruch 7,
**dadurch gekennzeichnet, dass**
die Trennwand (4) einen Fahrgastraum (2) und einen Laderaum (3) voneinander trennt oder eine Außenwand (5) des Kraftfahrzeugs (1) ist.

## Claims

1. Socket device (7) for a motor vehicle (1), comprising a socket (9) arranged in a housing (8) for receiving a plug, the socket device (7)
comprising a bearing (10) by means of which the housing (8) can be rotatably mounted about an axis of rotation (11) at least indirectly on a partition wall (4) of the motor vehicle (1) such that the socket (9) is accessible from both sides of the partition wall (4) by a particular rotation of the housing (8),
**characterized in that**
the housing (8) is designed as a straight circular cylinder such that the axis of rotation (11) of the housing (8) runs parallel to a cylindrical shell (17) through respective centers (20) of a base (18) and top surface (19) of the circular cylinder, a predetermined circular segment (23) with a predetermined circular arc (24) and a predetermined chord (25) has been cut out on each of two cylindrical surfaces (22) arranged at a predetermined distance parallel to the base (18) and top surface (19) of the housing (8) such that the housing (8) has a recess between the two cylindrical surfaces (22) at which recess the socket (9) is arranged in the housing (8).

2. Socket device according to claim 1,
**characterized in that**
the socket (9) is designed to provide an electrical voltage of 100, 115, 120, 127, 200, 220, 230 or 240 volts.

3. Socket device (7) according to either of the preceding claims,
**characterized in that**
the housing (8) is rotatable about the axis of rotation (11) in at least two predetermined positions.

4. Socket device (7) according to any of the preceding claims,
**characterized in that**
the housing (8) is rotatable about the axis of rotation (11) into a predetermined intermediate position (16) in which the socket (9) is not accessible from either side of the partition wall (4).

5. Socket device (7) according to any of the preceding claims,
**characterized in that**
the housing (8) is enclosed by two holders (13) that can be mounted on the partition wall (4).

6. Socket device (7) according to any of the preceding claims,
**characterized in that**
the housing (8) is designed as a prism with a triangular base surface (18') such that the axis of rotation (11) of the housing (8) runs along an edge of the prism perpendicular to the base surfaces (18) and the socket (9) is arranged on a side surface (26) of the housing (8) opposite the axis of rotation (11).

7. Motor vehicle (1) having a socket device (7) according to any of claims 1 to 6, wherein the socket device (7) is arranged on a partition wall (4) of the motor vehicle (1).

8. Motor vehicle (1) according to claim 7,
**characterized in that**
the partition wall (4) separates a passenger compartment (2) and a cargo compartment (3) from one another or is an outer wall (5) of the motor vehicle (1).

## Revendications

1. Dispositif à prise (7) pour un véhicule automobile (1), comprenant une prise (9) disposée dans un boîtier (8) et permettant de recevoir une fiche, dans lequel le dispositif à prise (7)
comprend un support (10) au moyen duquel le boîtier (8) peut être supporté de manière à pouvoir tourner, au moins indirectement, autour d'un axe de rotation (11) sur une cloison (4) du véhicule automobile (1) de telle sorte que la prise (9) est accessible des deux côtés de la cloison (4) par une rotation respective du boîtier (8),
**caractérisé en ce que**
le boîtier (8) est conçu comme un cylindre circulaire droit de telle sorte que l'axe de rotation (11) du boîtier (8) s'étend parallèlement à un corps de cylindre (17) en passant par des centres (20) respectifs d'une surface de base (18) et d'une surface supérieure (19) du cylindre circulaire, dans lequel est évidé, au niveau de deux surfaces de cylindre (22) disposées respectivement à une distance prédéterminée parallèlement à la surface de base (18) et à la surface supérieure (19) du boîtier (8), respectivement un segment circulaire (23) prédéterminé comportant un arc de cercle (24) prédéterminé et une corde (25) prédéterminée, de telle sorte que le boîtier (8) présente, entre les deux surfaces de cylindre (22), un évidement au niveau duquel la prise (9) est disposée dans le boîtier (8).

2. Dispositif à prise selon la revendication 1,
**caractérisé en ce que**
la prise (9) est configurée pour fournir une tension électrique de 100, 115, 120, 127, 200, 220, 230 ou 240 volts.

3. Dispositif à prise (7) selon l'une des revendications précédentes,
**caractérisé en ce que**
le boîtier (8) peut tourner autour de l'axe de rotation (11) vers au moins deux positions prédéterminées.

4. Dispositif à prise (7) selon l'une des revendications précédentes,
**caractérisé en ce que**
le boîtier (8) peut tourner autour de l'axe de rotation (11) vers une position intermédiaire (16) prédéterminée dans laquelle la prise (9) n'est accessible d'aucun des deux côtés de la cloison (4).

5. Dispositif à prise (7) selon l'une des revendications précédentes,
**caractérisé en ce que**
le boîtier (8) est entouré de deux moyens de maintien (13) pouvant être supportés sur la cloison (4).

6. Dispositif à prise (7) selon l'une des revendications précédentes,
**caractérisé en ce que**
le boîtier (8) est conçu comme un prisme comportant une surface de base triangulaire (18') de telle sorte que l'axe de rotation (11) du boîtier (8) s'étend le long d'une arête du prisme perpendiculairement aux surfaces de base (18) et que la prise (9) est disposée sur une surface latérale (26) du boîtier (8) vis-à-vis de l'axe de rotation (11).

7. Véhicule automobile (1) comportant un dispositif à prise (7) selon l'une des revendications 1 à 6, dans lequel le dispositif à prise (7) est disposé sur une cloison (4) du véhicule automobile (1).

8. Véhicule automobile (1) selon la revendication 7,
**caractérisé en ce que**
la cloison (4) sépare l'habitacle (2) et le coffre (3) l'un de l'autre ou est une paroi extérieure (5) du véhicule automobile (1).
